**Europäisches Patentamt**

**European Patent Office**

**Office européen des brevets**

(11) Veröffentlichungsnummer: **0 292 698 B1**

(12) **EUROPÄISCHE PATENTSCHRIFT**

(45) Veröffentlichungstag der Patentschrift:
19.12.90

(51) Int. Cl.⁵: **F02B 37/12**, F01D 17/14

(21) Anmeldenummer: 88106364.8

(22) Anmeldetag: 21.04.88

(54) Abgasturbolader einer Brennkraftmaschine.

(30) Priorität: 12.05.87 DE 3715729

(43) Veröffentlichungstag der Anmeldung:
30.11.88 Patentblatt 88/48

(45) Bekanntmachung des Hinweises auf die Patenterteilung:
19.12.90 Patentblatt 90/51

(84) Benannte Vertragsstaaten:
DE FR GB IT NL

(56) Entgegenhaltungen:
EP-A- 0 093 462
EP-A- 0 191 380
DE-A- 3 200 521
DE-C- 895 293
FR-A- 2 359 973
GB-A- 678 944
GB-A- 2 031 069
US-A- 1 856 024

(73) Patentinhaber: Krupp MaK Maschinenbau GmbH,
Falckensteiner Strasse 2-4, D-2300 Kiel 17(DE)

(72) Erfinder: Heintze, Wolfgang, Lärchengrund 3,
D-2300 Kronshagen(DE)

(74) Vertreter: Hansmann, Dierk, Dipl.-Ing., Jessenstrasse 4,
D-2000 Hamburg 50(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Abgasturbolader in einer Brennkraftmaschine mit einer ein Gaseintrittsgehäuse aufweisenden Abgasturbine, wobei das Gaseintrittsgehäuse durch mindestens eine Zwischenwand getrennte, koaxiale Zuführkanäle aufweist, und mit einem Steuerschieber, mittels dem der Zuströmquerschnitt des inneren ringförmigen Zuführkanals ladedruck- und/oder abgastemperaturabhängig steuerbar ist.

Eine Anordnung dieser Art ist nach der GB-A 2 031 069 bekannt geworden. Hierdurch soll bei hochaufgeladenen Verbrennungsmotoren ein überproportionaler Ladedruckabfall im Teillastbetrieb in Verbindung mit einem vollastoptimierten Abgasturbolader verhindert werden. Da dieses Problem bei reduzierter Drehzahl auftritt, wird es vorzugsweise in Schiffsantrieben zum Antrieb von Festpropellern oder Verstellpropellern mit großen Steigungsraten vorkommen.

Diese bekannten Anordnungen berücksichtigen aber nicht die sich ergebenden thermodynamischen Schwierigkeiten, die das Verkleinern des wirksamen Düsenquerschnitts unter Verwendung des gleichen Verdichters zur Folge hat. Es werden auch nicht die konstruktiven Ausgestaltungen zur Erzielung einer möglichst verlustarmen Strömung und die Vermeidung von negativen Folgen der Gaspulsation auf den Ladungswechsel der Einzelzylinder der Brennkraftmaschine sowie deren Nachteile auf die Turbinenzuströmung ausreichend berücksichtigt. Auch die in der Praxis auftretenden Funktionsprobleme an den Dichtelementen und die thermischen Probleme im heißen Abgasstrom unter besonderer Berücksichtigung des Betriebes mit aggressiven Rückstandskraftstoffen, wie sie heute im Schiffsbetrieb üblich sind, und die daraus entstehenden Verschmutzungs- und Belagbildungsprobleme werden durch die bekannten Anordnungen nicht gelöst.

Die Aufgabe der Erfindung ist es, unter Berücksichtigung der thermodynamischen Verhältnisse eine einfache Ausbildung und Anordnung einer gattungsgemäßen Vorrichtung zu verbessern, die das Verkleinern des wirksamen Düsenquerschnitts gewährleistet und durch den Steuerschieber keine Beeinflussung der Gasverhältnisse erfolgt sowie eine verlustarme Turbinenströmung mit einer funktionsgerechten Abdichtung sicherstellt.

Die Lösung dieser Aufgabe erfolgt erfindungsgemäß dadurch, daß dem Gaseintrittsgehäuse ein Konverter vorgeschaltet ist, der mehrere Rohrstränge des Abgasrohrleitungsystems der Brennkraftmaschine zu einem Abgasstrom zusammenfaßt, und daß der Steuerschieber in axialer Richtung des Konverters im Konverter verschiebbar angeordnet ist.

Hierdurch wird auch ermöglicht, daß eine Reduzierung der Pumpgefahr am Verdichter auftritt. Ferner erfolgt keine Beeinflussung der Gasverhältnisse im Abgassystem des Motors durch Umluft.

Weitere günstige Ausgestaltungen der Erfindung sind durch die Merkmale der Unteransprüche gekennzeichnet.

In den Zeichnungen sind Ausführungsbeispiele der Erfindung schematisch dargestellt.

Es zeigen:

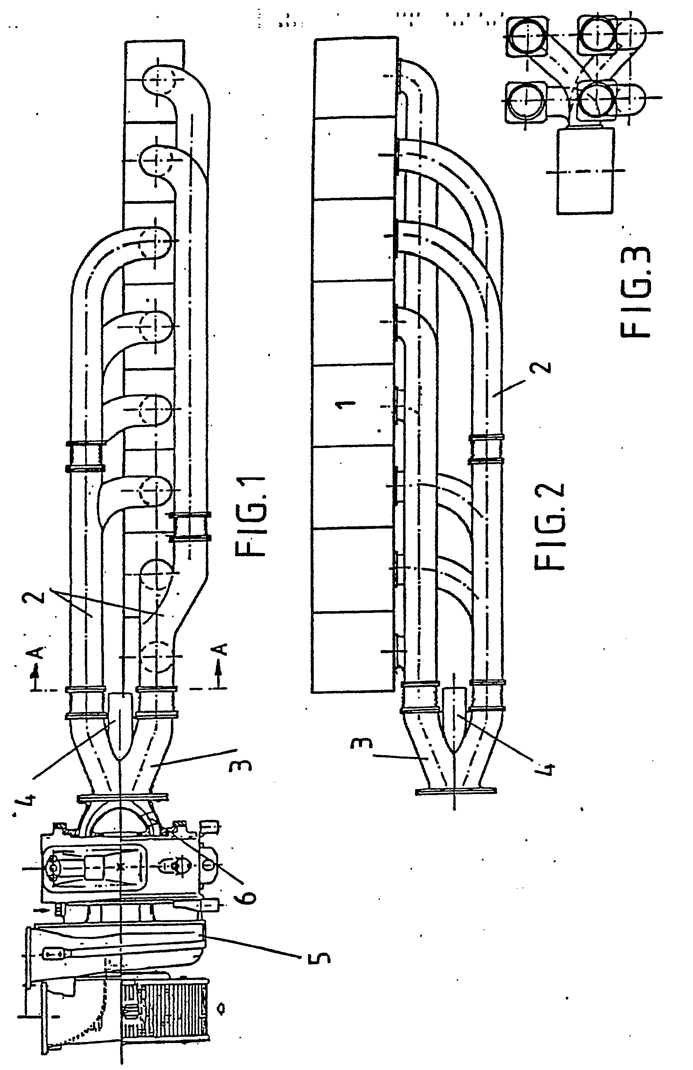

Fig. 1 eine Prinzipdarstellung einer Gesamtanlage mit dem Abgasrohrsystem,
Fig. 2 eine gegenüber der Anordnung nach Fig. 1 um 90° gedrehte Darstellung des Abgasrohrsystems,
Fig. 3 eine Schnittdarstellung gemäß Linie A–A der Fig. 1,
Fig. 4 einen Schnitt durch eine Vorrichtung zur variablen Aufladung.

Die dargestellte Anordnung wird durch einen Dieselmotor 1 mit zum Beispiel acht Zylindereinheiten gebildet. Die einzelnen Zylinder sind dabei über Rohrkrümmer mit einem Abgasrohrleitungssystem 2 verbunden. Die gebildeten vier Rohrstränge des Abgasrohrleitungssystems 2 sind zu einem Konverter 3 geführt und sind dabei in einem Quadrat angeordnet. Bei einer Anordnung mit drei Rohrsträngen wird ein gleichseitiges Dreieck gebildet.

Der Konverter 3 wird durch ein Gaseintrittsgehäuse 6 fortgesetzt, dem sich eine Abgasturbine 13 eines Abgasturboladers 5 anschließt. Der Konverter 3 nimmt in seinem Zentrum einen Steuerschieber 4 auf. Die Abgasturbine 13 bildet mit einem Luftverdichter des Abgasturbolators 5 eine Einheit, wobei der Luftverdichter die Luft über einen Rückkühler in einen Luftaufnehmer des Dieselmotors 1 fördert.

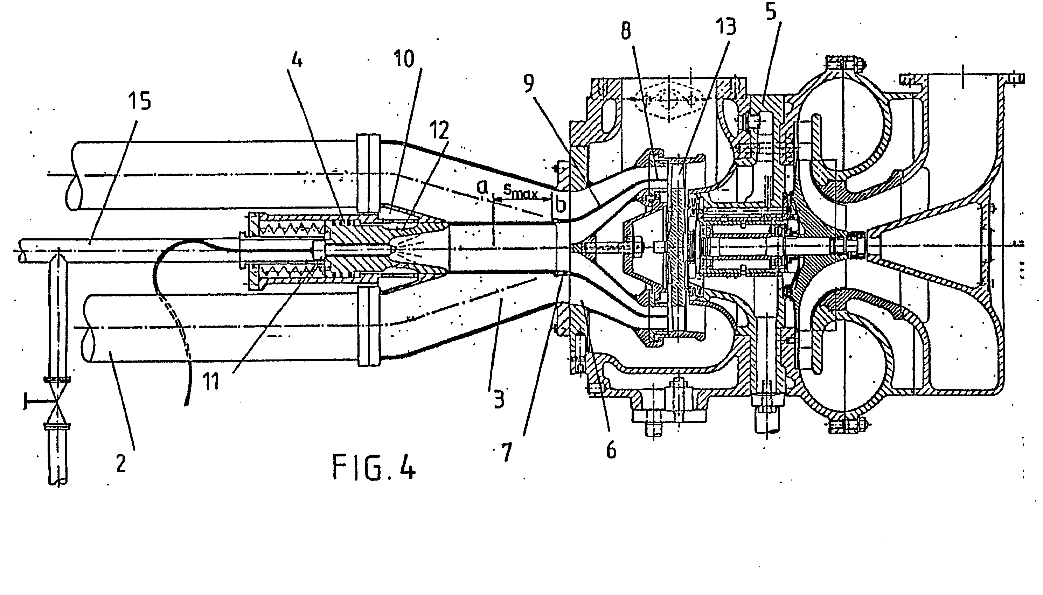

Gemäß Fig. 4 ist die Funktion der einzelnen zusammenwirkenden Elemente zu entnehmen. Der Abgasturbolader 5 ist leistungsmäßig entsprechend dem Vollastbetriebspunkt des Dieselmotors 1 ausgelegt. Ein Leitring 8 der Abgasturbine 13 ist zweiflutig ausgebildet und wird durch eine Trennwand 9 fortgesetzt, die eine Austrittskante eines Gasleittrichters 7 bildet. Am Eintritt des Gasleittrichters 7 ist dieser mit einem Kegelsitz versehen, der einem entsprechenden Sitz am Steuerschieber 4 zugeordnet ist.

Der Steuerschieber 4 ist verschiebbar im Konverter 3 zentrisch geführt. In einer angedeuteten Stellung a des Steuerschiebers 4 ist die Vollastbetriebsstellung, während Stellung b des Steuerschiebers 4 den inneren Teil des Gaseintrittsgehäuses 6 verschließt und dem kritischen Teillastpunkt entspricht. Gleichzeitig werden in diesem Fall über Steuerkanten des Steuerschiebers 4 Luftschlitze 12 freigegeben, damit Luft aus einer zugeordneten Umluftkammer 10 im inneren Teil des Gaseintrittsgehäuses 6 zugeführt wird. Bei extrem schwerer Drehmomentanforderung kann über ein Brennstoffeinspritzventil 11 zusätzlich Kraftstoff eingespritzt werden. Die Umluftkammer 10 kann entweder über eine Leitung 15 mit dem Luftaufnehmer des Dieselmotors 1 und/oder einer Fremdluftquelle verbunden sein, wie es sich für schnelle Lastaufschaltungen, beispielsweise bei einer Notstromanlage empfiehlt.

Bewegt sich der Steuerschieber 4 aus der Vollstellung a in Richtung b, kann hiermit gleichzeitig das Querschnittsverhältnis im Konverter 3 verändert werden, somit ergibt sich eine lastabhängige Beeinflussung der von den Zylindern kommenden Druckwellen und eine Minimierung der gegenseitigen Störungen untereinander mit positiven Auswirkungen auf das Durchspülverhalten des Dieselmotors 1.

Das Gesamtsystem kann über den Steuerschieber 4 durch verschiedene Steuergrößen je nach Anforderungsprofil gesteuert werden. Als Steuergröße empfiehlt sich direkt der Ladedruck im Ladeaufnehmer, der auf der Unterseite des Steuerschiebers 4 die Verschiebekraft einleitet. Es kann jedoch auch direkt die Abgastemperatur als Regelausgangsgröße genommen und über einen hydraulischen oder pneumatischen Regelkreis in eine Steuerschieberstellung umgesetzt werden. Denkbar sind auch elektromotorische Verstelleinrichtungen für den Steuerschieber 4.

## Patentansprüche

1. Abgasturbolader (5) in einer Brennkraftmaschine (1) mit einer ein Gaseintrittsgehäuse (6) aufweisenden Abgasturbine (13), wobei das Gaseintrittsgehäuse (6) durch mindestens eine Zwischenwand (9) getrennte, koaxiale Zuführkanäle aufweist, und mit einem Steuerschieber (4), mittels dem der Zuströmquerschnitt des inneren ringförmigen Zuführkanals ladedruck- und/oder abgastemperaturabhängig steuerbar ist, dadurch gekennzeichnet, daß dem Gaseintrittsgehäuse (6) ein, Konverter (3) vorgeschaltet ist, der mehrere Rohrstränge des Abgasrohrleitungssystems (2) der Brennkraftmaschine zu einem Abgasstrom zusammenfaßt, und daß der Steuerschieber (4) in axialer Richtung des Konverters (3) im Konverter (3) verschiebbar angeordnet ist.

2. Abgasturbolader nach Anspruch 1, dadurch gekennzeichnet, daß der Steuerschieber (4) als Rohrelement ausgebildet ist.

3. Abgasturbolader nach Anspruch 2, dadurch gekennzeichnet, daß das Rohrelement als Luftzuführkanal zur Abgasturbine (13) dient.

4. Abgasturbolader nach Anspruch 3, dadurch gekennzeichnet, daß eine Kraftstoffeinspritzung in das Rohrelement vorgesehen ist.

5. Abgasturbolader nach Anspruch 3 oder 4, dadurch gekennzeichnet, daß die im Rohrelement zugeführte Luft über eine Umluftkammer (10) zuführbar und die Luftzufuhr über Luftschlitze (12) in Abhängigkeit von der Stellung des Steuerschiebers (4) einstellbar ist.

6. Abgasturbolader nach einem der Ansprüche 1 bis 5, dadurch gekennzeichnet, daß der Strömungsquerschnitt des Konverters (3) über den im Zentrum liegenden Steuerschieber (4) von einer geöffneten zur geschlossenen Stellung lastabhängig etwa auf 40% des Strömungsquerschnittes im geöffneten Zustand reduzierbar ist.

## Claims

1. Exhaust gas-driven turbocharger (5) in an internal combustion engine (1) with an exhaust gas turbine (13), which comprises a gas intake housing (6), the gas intake housing (6) comprising coaxial supply ducts, which are separated by at least one partition wall (9), and with a control slide valve (4), by means of which the inflow cross section of the inner annular supply duct can be regulated in accordance with the boost pressure and/or exhaust gas temperature, characterised in that a converter (3) is disposed before the gas intake housing (6), which converter combines a plurality of pipeline conduits of the exhaust pipe system (2) of the internal combustion engine to form an exhaust-gas flow, and that the control slide valve (4) is arranged such that it can be displaced in the converter (3) in the axial direction of the latter.

2. Exhaust gas-driven turbocharger according to claim 1, characterised in that the control slide valve (4) is formed as a pipe element.

3. Exhaust gas-driven turbocharger according to claim 2, characterised in that the pipe element serves as an air supply duct for the exhaust gas turbine (13).

4. Exhaust gas-driven turbocharger according to claim 3, characterised in that fuel is injected into the pipe element.

5. Exhaust gas-driven turbocharger according to claim 3 or 4, characterised in that the air which is supplied in the pipe element can be supplied via a circulating air chamber (10) and the air supply can be adjusted by way of air slots (12) in accordance with the position of the control slide valve (4).

6. Exhaust gas-driven turbocharger according to one of claims 1 to 5, characterised in that the flow cross section of the converter (3) can be reduced to approximately 40% of the flow cross section in the open state by the control slide valve (4), which is disposed in the centre, moving from an open to the closed position in accordance with the load.

## Revendications

1. Turbocompresseur à gaz d'échappement (5) d'un moteur a combustion (1) qui comporte une turbine à gaz d'échappement (13) présentant une chambre d'entrée de gaz (6), la chambre d'entrée de gaz (6) comportant des canaux d'amenée coaxiaux séparés par au moins une cloison (9), le turbocompresseur comportant en outre un tiroir de commande (4) par lequel la section transversale d'arrivée du canal d'amenée annulaire interne peut être réglée en fonction de la pression de charge et/ou de la température des gaz d'échappement, le turbocompresseur étant caractérisé en ce qu'en amont de la chambre d'entrée de gaz (6), il est prévu un convertisseur (3) qui réunit plusieurs lignes de tubes du systeme de conduite tubulaire des gaz d'échappement (2) du moteur à combustion pour la formation d'un seul courant de gaz d'échappement, et en ce que le tiroir de commande (4) est prévu mobile dans le convertisseur (3) dans le sens axial de celui-ci.

2. Turbocompresseur à gaz d'échappement suivant la revendication 1, caractérisé en ce que le tiroir de commande (4) est prévu sous la forme d'un élément tubulaire.

3. Turbocompresseur à gaz d'échappement suivant la revendication 2, caractérisé en ce que l'élément tubulaire sert de canal d'amenée d'air à la turbine à gaz d'échappement (13).

4. Turbocompresseur à gaz d'échappement suivant la revendication 3, caractérisé en ce qu'il est prévu une injection de combustible dans l'élément tubulaire.

5. Turbocompresseur à gaz d'échappement suiuant l'une ou l'autre des revendications. 3 et 4, caractérisé en ce que l'air amené à l'élément tubulaire peut l'être par une chambre de circulation d'air (10) et en ce que l'amenée d'air peut être reglée par des fentes de passage d'air (12) en fonction de la position du tiroir de commande (4).

6. Turbocompresseur à gaz d'échappement suivant l'une quelconque des revendications 1 a 5, caractérisé en ce que la section transversale d'écoulement du convertisseur (3) peut être reduite en fonction de la charge jusqu'à environ 40% de la section transversale d'écoulement à l'état ouvert par le tiroir de commande (4) se trouvant au centre du convertisseur, qui passe d'une position d'ouverture à la position de fermeture.

FIG.1

FIG.2

FIG.3

EP 0 292 698 B1

FIG. 4